# EUROPEAN PATENT SPECIFICATION

(11) **EP 2 696 411 B1**
(45) Date of publication and mention of the grant of the patent: **03.05.2017**
(21) Application number: 12767496.8
(22) Date of filing: 07.03.2012
(51) Int. Cl.: H01M 4/131, H01M 4/136, H01M 4/1391, H01M 4/1397, H01M 4/62, H01M 10/052, H01M 4/36, H01M 4/58

(54) **LITHIUM IRON PHOSPHATE POSITIVE ELECTRODE MATERIAL, AND METHOD FOR PRODUCING SAME**
LITHIUMEISENPHOSPHAT-POSITIVELEKTRODENMATERIAL UND HERSTELLUNGSVERFAHREN DAFÜR
MATÉRIAU D'ÉLECTRODE POSITIVE LITHIUM FER PHOSPHATE ET SON PROCÉDÉ DE FABRICATION

(30) Priority: 01.04.2011 JP 2011082063
(43) Date of publication of application: 12.02.2014
(73) Proprietor: Mitsui Engineering & Shipbuilding Co., Ltd., Chuo-ku Tokyo 104-8439 (JP)
(72) Inventor: SAKAGUCHI, Yoshiki, Ichihara-shi, Chiba 290-8531 (JP); HAMANAKA, Yoshitaka, Ichihara-shi, Chiba 290-8531 (JP)
(74) Representative: Hoffmann Eitle
(86) International application number: PCT/JP2012/055846
(87) International publication number: WO 2012/137572

(56) References cited:
- JP-A- 2001 328 813
- JP-A- 2004 234 977
- JP-A- 2006 164 859
- JP-A- 2006 302 671
- JP-A- 2008 277 119
- JP-A- 2009 245 762
- JP-A- 2010 092 599
- JP-A- 2010 218 884
- JP-A- 2011 076 931
- JP-A- 2011 210 649
- CHO Y D ET AL: "The effect of carbon coating thickness on the capacity of LiFePO4/C composite cathodes", JOURNAL OF POWER SOURCES, ELSEVIER SA, CH, vol. 189, no. 1, 25 September 2008 (2008-09-25), pages 256-262, XP025982694, ISSN: 0378-7753, DOI: 10.1016/J.JPOWSOUR.2008.09.053 [retrieved on 2008-09-25]
- HEIKE GABRISCH ET AL: "Carbon Surface Layers on a High-Rate LiFePO[sub 4]", ELECTROCHEMICAL AND SOLID-STATE LETTERS, vol. 9, no. 7, 12 May 2006 (2006-05-12), page A360, XP055133153, ISSN: 1099-0062, DOI: 10.1149/1.2203309

## Description

### Technical Field

The present invention relates to a lithium iron phosphate cathode material for use in a lithium ion secondary battery.

### Background Art

Examples of cathode materials for secondary batteries including metal lithium battery, lithium ion battery and lithium polymer battery include lithium-transition metal oxides, such as lithium cobaltate (LiCoO₂), lithium manganate (LiMnO₂), lithium nickelate (LiNiO₂), lithium iron phosphate (LiFePO₄).

Lithium iron phosphate, which has an olivine-type crystal structure, has a large theoretical capacity (170 mAh/g) and a relatively high electromotive force (approximately 3.4 to 3.5 V against an Li/Li⁺ negative electrode). In addition, lithium iron phosphate is thermodynamically stable so that it releases little oxygen or heat up to approximately 400°C and is therefore regarded as a preferred cathode material from a safety perspective as well.

Further, lithium iron phosphate can be produced inexpensively from iron, phosphorus and so on, which are abundant resources, and is therefore expected to be a promising cathode material.

On the other hand, lithium iron phosphate cannot provide good output characteristics on its own because of its low electrical conductivity (electric conductivity σ ≤ 10⁻⁶ S/cm at 25°C) and low lithium-ion diffusivity (maximum particle size D ≤ 10⁻¹⁷ m²/s at 25°C) derived from its crystal structure. In addition, lithium iron phosphate has a lower density (3,500 to 3,600 kg/m³) and therefore has a lower volume energy density than oxide-based active materials, such as lithium cobaltate.

For the purpose of overcoming the low electrical conductivity, a technique in which lithium iron phosphate is combined with a carbon material by a ball-milling method to impart electron conductivity thereto and a technique in which a carbon-containing compound, such as saccharide, is added as a carbon material when the ingredients of lithium iron phosphate, which is formed by calcining the ingredients, are mixed to use the coalification of the saccharide during the calcination to coat the surface of the lithium iron phosphate particles with carbon have been proposed (Patent Literatures 1 and 2, for example).

However, in the case of the method disclosed in Patent Literature 1 or 2, the carbon material has to be added in an amount of approximately 10 wt% or greater to achieve sufficient electron conductivity as an electrode material and sufficient rate characteristics when used in a secondary battery. This leads to new problems, such as a decrease in volume capacity density, an increase in water content and unstable slurry properties.

In contrast, the present inventors have proposed a method for producing lithium iron phosphate having excellent performance as an electrode material by carrying out carbon coating on lithium iron phosphate particles using a smaller amount of a carbon material (Patent Literature 3).
Journal of Power Sources 189 (2009) 256-262 relates to the effect of carbon coating thickness on the capacity of LiFePO₄/C composite cathodes. It states that electrochemical properties of LiFePO₄ are correlated to the amount of carbon and its coating thickness and uniformity and comes to the conclusion that a carbon coating layer must be uniformly distributed around each active particle in order to minimize the polarization, because the lower polarization leads to a higher reversible capacity.
JP 2010-092599 A relates to a positive electrode material comprising a particulate active substance containing phosphoric acid manganese lithium. The particulate active substance comprises a film body which contains carbon and is attached to the surface of the particulate active substance and a projecting body which contains carbon and projects outside from the surface of the particulate active substance or from the film body. In addition, a manufacturing method for the positive electrode material having lithium manganese phosphate comprising a hydrothermal synthesis process for forming the particle containing the lithium manganese phosphate by a hydrothermal method in the presence of a first organic compound having two or more hydroxy groups with a molecular weight of not more than 350 in a molecule and a calcination process for calcinating the particle in the presence of a second organic compound having a hydroxy group with a molecular weight of not less than 500 in the molecule is described.
Electrochemical and Solid-State Letters, 9 (7) A360-A363 (2006) relates to carbon Surface Layers on a High-Rate LiFePO₄ and describes transmission electron microscopy (TEM) imaging of particles of a high-rate LiFePO₄ sample containing a small amount of in situ carbon.

### Related Art Document

### Patent Literature

Patent Literature 1: JP-A-2005-183032
Patent Literature 2: JP-A-2009-081002
Patent Literature 3: JP-A-2009-245762

### Summary of the Invention

### Problem to be Solved by the Invention

The present inventors further conducted earnest studies and succeeded in producing a lithium iron phosphate cathode material having an excellent performance as an electrode material by coating lithium iron phosphate particles with carbon more effectively.

It is, therefore, an object of the present invention to provide a lithium iron phosphate cathode material having high electron conductivity and high lithium ion conductivity, in other words, having excellent performance as an electrode material, provided by a carbon coating formed using a small amount of a carbon material, and a method for producing the lithium iron phosphate cathode material.

### Means for Solving the Problem

For the purpose of accomplishing the above object, a lithium iron phosphate cathode material according to a first aspect of the present invention is a lithium iron phosphate cathode material having primary particles of lithium iron phosphate coated with a conductive carbon cover layer, characteroized in that the conductive carbon cover layer comprises thick layer portions that have a thickness of 2 nm or more and thin layer portions that have a thickness of less than 2 nm, wherein the thick layer portions have carbon protrusions with a length of 5 nm to 100 nm.

According to this aspect, because the conductive carbon cover layer has thick layer portions with a thickness of 2 nm or more and thin layer portions with a thickness of less than 2 nm, the lithium iron phosphate cathode material has high electron conductivity and high lithium ion conductivity.

The thick layer portions with a thickness of 2 nm or more of the conductive carbon cover layer can provide sufficient electron conductivity as a cathode material for a secondary battery. The thin layer portions with a thickness of less than 2 nm of the conductive carbon cover layer have good lithium ion conductivity. Thus, when a secondary battery is produced, the rate characteristics are improved because lithium ions can pass easily during charge and discharge.

According to this aspect, in the lithium iron phosphate cathode material having primary particles of lithium iron phosphate coated with a conductive carbon cover layer, the carbon protrusions increase the contact area between the primary particles of lithium iron phosphate. Thus, the lithium iron phosphate cathode material has improved electron conductivity. Thus, sufficient electron conductivity can be obtained in spite of the presence of a smaller amount of carbon. As a result, the secondary battery using the cathode material has improved rate characteristics and lifetime characteristics.

A lithium iron phosphate cathode material according to a second aspect of the present invention is the lithium iron phosphate cathode material according to the first aspect, having secondary particles each formed of at least two primary particles of lithium iron phosphate contacting each other via the carbon protrusions.

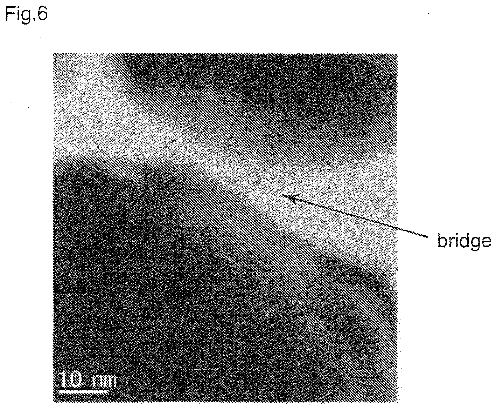

Usually, primary particles of lithium iron phosphate coated with a conductive carbon cover layer are aggregated to form secondary particles as carbon from the conductive carbon cover layer (refer to FIG. 6) is linked to form bridges. The lithium iron phosphate cathode material according to this aspect has higher electron conductivity because the primary particles have carbon protrusions on the conductive carbon cover layer and adjacent primary particles contact each other not only via the carbon protrusions but also via the bridges.

According to this aspect, when the cathode material is used in a secondary battery, the lithium iron phosphate cathode material has sufficient electron conductivity for charge and discharge of the secondary battery.

### Brief Description of Drawings

FIG. 1 is a schematic diagram of a lithium iron phosphate cathode material according to Example 1-1.
FIG. 2 is a schematic diagram of a lithium iron phosphate cathode material according to Example 1-2.
FIG. 3 is a schematic diagram of a lithium iron phosphate cathode material according to Comparative Example 1.
FIG. 4 is a transmission electron microscope (TEM) photograph of the lithium iron phosphate cathode material according to Example 1-1.
FIG. 5 is a transmission electron microscope (TEM) photograph of the lithium iron phosphate cathode material according to Comparative Example 1.
FIG. 6 is a transmission electron microscope (TEM) photograph of a bridge formed between primary particles of lithium iron phosphate.
FIG. 7 is a transmission electron microscope (TEM) photograph of a carbon protrusion formed on a primary particle of lithium iron phosphate according to Example 1-1.
FIG. 8 is a schematic diagram of a lithium iron phosphate cathode material according to Example 2.

### Mode for Carrying out the Invention

Description is hereinafter made of the present invention based on examples. It should be noted that the present invention is not limited by the examples.

### [Example 1]

First, one example of the method for producing a lithium iron phosphate cathode material according to the present invention is described.

The lithium iron phosphate cathode material according to the present invention is produced by mixing lithium iron phosphate particles and a carbon precursor which forms a conductive carbon cover layer when pyrolyzed, and carrying out a calcination step of calcining the mixture at a temperature and in an atmosphere where the carbon precursor undergoes pyrolysis.

As the lithium iron phosphate particles, lithium iron phosphate particles synthesized by a well-known production method (such as a method disclosed in JP-A-2004-63386) are used. The lithium iron phosphate particles are preferably lithium iron phosphate particles having a specific surface area of 8 to 20 m²/g and an ultrafine particle size (50 to 300 nm).

As the carbon precursor, a carbon material containing 20 to 99 wt% of an aromatic compound with a molecular weight of 160 or higher and having a viscosity of 500 to 1000 mPa ·sec at 20°C is used. The carbon precursor is preferably a substance composed of substances with a molecular weight of 160 or lower which are volatilized and discharged out of the system and a substance with a molecular weight of 160 or higher which is not volatilized but is pyrolyzed to form a conductive carbon cover layer during the calcination step.

The aromatic compound with a molecular weight of 160 or higher is preferably a compound having four or more benzene ring structures. Examples of the aromatic compound include pyrene, pyrene derivatives obtained by combining an amino group, bromo group, methyl chloride group, alkyl group or nitro group with pyrene, 1,2,3,6,7,8-hexahydropyrene, naphthacene, chrysene, benzopyrene, dibenzofuran, fluorene, phenanthrene, anthracene, carbazole and fluoranthene. These compounds are contained in vacuum heavy oil, and a vacuum heavy oil which contains 20 to 99 wt% of an aromatic compound with a molecular weight of 160 or higher and satisfies the above viscosity requirement may be used as the carbon precursor.

A mixing step is carried out after adding the carbon precursor to the lithium iron phosphate particles. The carbon precursor is preferably added in an amount of 0.5 wt% to 5.0 wt% based on the weight of the lithium iron phosphate particles.

The mixing of the lithium iron phosphate particles and the carbon precursor is carried out using a planetary ball mill or a rotary mixer, such as High-Speed Mixer (Fukae Powtec Corporation), Henschel Mixer (trademark) (NIPPON COKE & ENGINEERING. CO., LTD.) or New-Gra Machine (SEISHIN ENTERPRISE Co., Ltd.).

Here, the thickness distribution of the conductive carbon cover layer of the lithium iron phosphate cathode material which is obtained after the calcination step can be controlled by adding the carbon precursor undiluted or in the form of a solution prepared by diluting it with an organic solvent, such as acetone or benzene, as needed to the lithium iron phosphate material and stirring the mixture in a planetary ball mill or rotary mixer. In other words, portions having a thick cover layer and portions having a thin cover layer can be formed at a desired ratio. More specifically, the viscosity of the solution is adjusted by changing the amount of the organic solvent added to control the distribution state of the thickness of the carbon cover layer. When the concentration of the carbon precursor solution is low, the solution has such a low viscosity that the carbon precursor can be dispersed uniformly over the entire powder, resulting in a carbon cover layer with a uniform thickness. When the concentration of the solution is high or the carbon precursor is added undiluted, differences tend to occur in the thickness distribution of the carbon cover layer. In the following, portions of the conductive carbon cover layer with a thickness of 2 nm or more are referred to as thick layer portions, and portions of the conductive carbon cover layer with a thickness of less than 2 nm are referred to as thin layer portions.

For example, a carbon precursor having a viscosity of 500 to 1,000 mPa ·sec (B-type viscometer, 6 rpm) at 20°C is added undiluted in an amount of 4.0 wt% based on the weight to the lithium iron phosphate powder, and the mixture is stirred in New-Gra Machine (SEISHIN ENTERPRISE Co., Ltd.) at 500 rpm for 8 minutes. By this step, the carbon precursor adheres to the surface of the lithium iron phosphate particles in a relatively patchy and non-uniform state. As a result, the conductive carbon cover layer on the lithium iron phosphate cathode material obtained after a calcination step has thick portions and thin portions.

Alternatively, a solution with a concentration of 50% is prepared by adding the same weight of acetone or benzene as the undiluted carbon precursor, and the solution is added in an amount of 4.0 wt% in terms of the carbon precursor based on the weight of the lithium iron phosphate powder. Then, the mixture is stirred in New-Gra Machine (SEISHIN ENTERPRISE Co., Ltd.) at 500 rpm for 8 minutes. By this step, the carbon precursor uniformly adheres to the surface of the lithium iron phosphate particles. As a result, the conductive carbon cover layer on the lithium iron phosphate cathode material obtained after a calcination step has a uniform thickness.

As described above, by arbitrarily adjusting the concentration and viscosity of the solution composed of the carbon precursor and an organic solvent, such as acetone and benzene, the thickness of the conductive carbon cover layer on the lithium iron phosphate cathode material which is obtained after a calcination step can be controlled and the thickness distribution (thick layer portions and thin layer portions) can be formed at a desired ratio. The solution adjustment conditions are preferably adjusted so that the conductive carbon cover layer can have a thickness distribution in the range of 0.5 nm to 6 nm.

The present inventors have also found that carbon nanotube-like carbon protrusions with a length of 5 nm to 100 nm tend to be formed on the thick portions of the conductive carbon cover layer. Thus, by adjusting the concentration and viscosity of the carbon precursor solution so that thick layer portions with a relatively large thickness can be formed, carbon protrusions can be formed on the conductive carbon cover layer.

It is believed that carbon protrusions are likely to be formed because thick layer portions with a relatively large thickness are formed when the carbon precursor solution has a high concentration or the carbon precursor is added undiluted. In addition, it is possible to prevent the formation of the carbon protrusions by lowering the concentration of carbon precursor solution appropriately so that thick layer portions with a small thickness (with a thickness closer to 2 nm) can be formed.

When the lithium conductive carbon cover layer on the primary particles of lithium iron phosphate has thick layer portions with a thickness of 2 nm or more and thin layer portions with a thickness of less than 2 nm as described above, the following effects can be achieved.

The thick layer portions with a thickness of 2 nm or more of the conductive carbon cover layer can provide sufficient electron conductivity as a cathode material for a secondary battery. The thin layer portions with a thickness of less than 2 nm of the conductive carbon cover layer have high lithium ion conductivity because the cover layers are so thin that the lithium ions can pass through them easily. Thus, when a secondary battery is produced, the rate characteristics are improved because lithium ions can pass easily during charge and discharge.

A lithium iron phosphate cathode material can be produced by subjecting the mixture of the lithium iron phosphate particles and the carbon precursor obtained in the mixing step to a calcination step. The calcination step is carried out by increasing the temperature in a calcination furnace to 550°C to 750°C in an inert gas atmosphere, such as nitrogen gas.

### (Example 1-1)

To 500 g of lithium iron phosphate particles (with a specific surface area of 8 to 20 m²/g and an ultrafine particle size of 50 to 300 nm) synthesized by drying a slurry obtained by mixing lithium hydroxide (LiOH), iron oxalate (FeC₂O₄) and ammonium dihydrogenphosphate (NH₄H₂PO₄) in isopropyl alcohol and grinding the mixture in a beads mill, and calcining the dried slurry at 550°C for 3 hours, a vacuum heavy oil with a viscosity of 600 mPa ·sec at 20°C (as measured with a B-type viscometer at a rotational speed 6 rpm) as a carbon precursor is added undiluted in an amount of 4.0 wt% based on the weight of the lithium iron phosphate particles. The mixture is mixed in New-Gra Machine (manufactured by SEISHIN ENTERPRISE Co., Ltd.) at a rotational speed of 500 rpm for 8 minutes, and then in a jet mill (manufactured by SEISHIN ENTERPRISE Co., Ltd.) to mix the mixture more precisely and separate agglomerated particles. The resulting mixture is calcined at 700°C for 3 hours.

### (Example 1-2)

To the same lithium iron phosphate particles as used in Example 1-1, a 90% concentration carbon precursor solution obtained by diluting the carbon precursor (undiluted vacuum heavy oil) with acetone in an amount of 10 wt% based on the weight of the carbon precursor is added in an amount of 2.5 wt% in terms of the carbon precursor based on the weight of the lithium iron phosphate particles as in the case of Example 1-1. The mixture is mixed in New-Gra Machine (manufactured by SEISHIN ENTERPRISE Co., Ltd.) at a rotational speed of 500 rpm for 8 minutes, and then in a jet mill (manufactured by SEISHIN ENTERPRISE Co., Ltd.) to mix the mixture more precisely and separate agglomerated particles. The resulting mixture is subjected to a calcination step under the same conditions as those in Example 1-1.

### (Comparative Example 1)

To the same lithium iron phosphate particles as used in Example 1, coal pitch as a carbon precursor is added in an amount of 6 wt% based on the weight of the lithium iron phosphate. The mixture is mixed in New-Gra Machine at a rotational speed of 500 rpm for 8 minutes. The resulting mixture is calcined at 780°C for 6 hours.

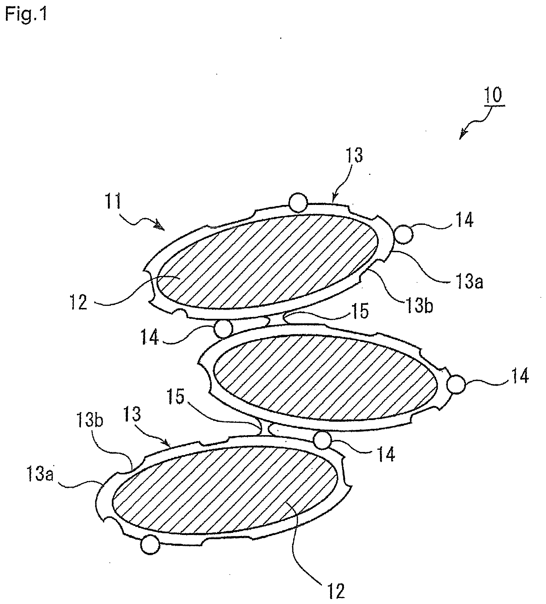

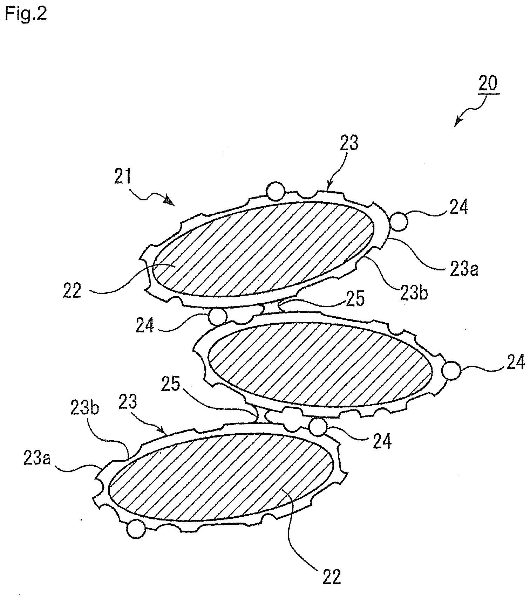

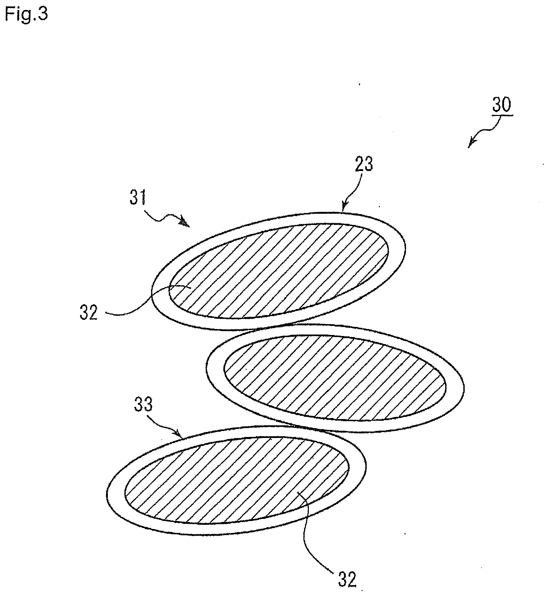

FIG. 1 is a schematic diagram of the lithium iron phosphate cathode material produced by the production method of Example 1-1, and FIG. 2 is a schematic diagram of the lithium iron phosphate cathode material produced by the production method of Example 1-2. FIG. 3 is a schematic diagram of the lithium iron phosphate cathode material produced by the production method of Comparative Example 1.

A lithium iron phosphate cathode material 10 of Example 1-1 is composed of secondary particles formed of primary particles 11 of lithium iron phosphate having a conductive carbon cover layer 13 and aggregated by bridges 15 (refer to FIG. 6) formed by linkage of carbon from a conductive carbon cover layer 13.

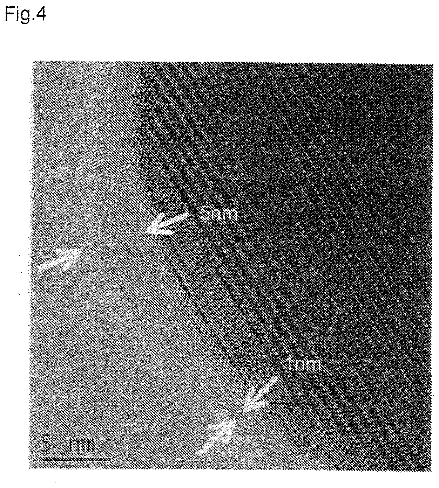

The conductive carbon cover layer 13 on the primary particles 11 of lithium iron phosphate has a thickness of 0.5 nm to 6 nm, and has thick layer portions 13a with a thickness of not less than 2 nm and not more than 6 nm and thin layer portions 13b with a thickness of not less than 0.5 nm and less than 2 nm. FIG. 4 is a transmission electron microscope (TEM) photograph of the lithium iron phosphate cathode material according to Example 1-1.

When the lithium conductive carbon cover layer 13 on the primary particles 11 of lithium iron phosphate has the thick layer portions 13a with a thickness of 2 nm or more and the thin layer portions 13b with a thickness of less than 2 nm, the thick layer portions 13a can provide sufficient electron conductivity as a cathode material for a secondary battery and the thin layer portions 13b have good lithium ion conductivity.

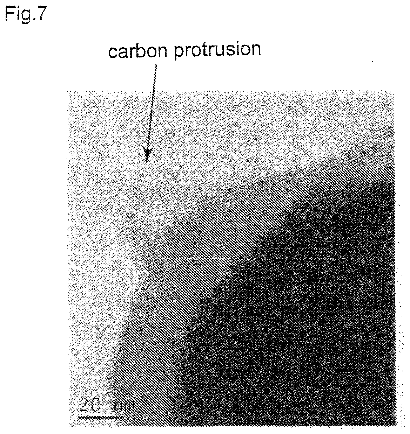

In addition, carbon protrusions 14 (refer to FIG. 7) with a length of 5 nm to 100 nm are formed on the surface of the conductive carbon cover layer 13, and the primary particles 11 of lithium iron phosphate 12 are also in contact with one another via the carbon protrusions 14. In this example, because the primary particles 11 of the lithium iron phosphate 12 are in contact with one another via the bridges 15 and the carbon protrusions 14, the lithium iron phosphate cathode material 10 has high electron conductivity as a whole. Thus, when the cathode material is used in a secondary battery, the lithium iron phosphate cathode material has sufficient electron conductivity for charge and discharge of the secondary battery.

The lithium iron phosphate cathode material produced in Example 1-1 has a carbon content of 0.8% to 1.5 wt%, which indicates that the lithium iron phosphate cathode material exhibits excellent properties in spite of containing a very small amount of carbon.

A lithium iron phosphate cathode material 20 of Example 1-2 is next described with reference to FIG. 2.

The lithium iron phosphate cathode material 20 of Example 1-2 is composed of secondary particles formed of primary particles 21 of lithium iron phosphate 22 having a conductive carbon cover layer 23 and aggregated by bridges 25 formed by linkage of carbon from a conductive carbon cover layer 23 as in the case with the lithium iron phosphate cathode material of Example 1-1. The conductive carbon cover layer 23 on the primary particles 21 of lithium iron phosphate 22 has a thickness of 0.5 nm to 6 nm, and has thick layer portions 23a with a thickness of not less than 2 nm and not more than 6 nm and thin layer portions 23b with a thickness of not less than 0.5 nm and less than 2 nm.

The lithium iron phosphate cathode material 20 of Example 1-2 has higher lithium ion electrical conductivity because the thin layer portions 23b constitute a larger proportion of the conductive carbon coating than in Example 1-1.

From a perspective of lithium ion electrical conductivity, the larger the proportion of the thin layer portions 23b, the better. However, the lithium ion electrical conductivity is improved dramatically when each particle has at least one thin layer portion. The thin layer portions have to have an area of at least 2 nm x 2 nm.

Carbon protrusions 24 with a length of 5 nm to 100 nm are also formed on the surface of the conductive carbon cover layer 23 of Example 1-2, and the primary particles 21 of lithium iron phosphate 22 are also in contact with one another via the carbon protrusions 24. Thus, the lithium iron phosphate cathode material has sufficient electron conductivity for charge and discharge of the secondary battery.

A lithium iron phosphate cathode material 30 of Comparative Example 1 is next described with reference to FIG. 3.

The lithium iron phosphate cathode material 30 of Comparative Example 1 has secondary particles formed of primary particles 31 of lithium iron phosphate with a conductive carbon cover layer 33 with a generally uniform thickness contacting one another.

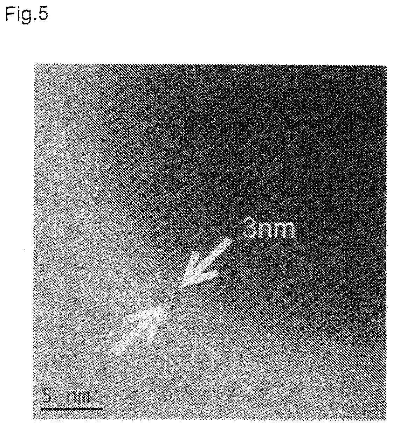

As shown in FIG. 5, the conductive carbon cover layer 33 of Comparative Example 1 had a uniform thickness of approximately 3 nm.

The lithium iron phosphate cathode material produced in Comparative Example 1 had a carbon content of 4.0% to 6.0 wt%, which means that the lithium iron phosphate cathode material contained several times as much carbon as the lithium iron phosphate cathode material of Example 1-1.

### <Comparison between Example 1-1 and Comparative Example 1>

Table 1 shows the rate characteristics of the lithium ion secondary batteries produced using the lithium iron phosphate cathode materials of Example 1-1 and

### Comparative Example 1.

**[Table 1]**

| | Example 1-1 | Comparative Example 1 |
|---|---|---|
| Capacity at 0.2C | 162 mAh/g | 158 mAh/g |
| Capacity at 1C | 157 mAh/g | 155 mAh/g |
| Capacity at 5C | 142 mAh/g | 147 mAh/g |
| Voltage at 5C (@80 mAh/g) | 3.2 V | 3.1 V |
| Capacity at 15C | 122 mAh/g | 115 mAh/g |
| Voltage at 15C (@80 mAh/g) | 2.78 V | 2.35 V |
| Capacity at 20C | 112 mAh/g | 65 mAh/g |
| Voltage at 20C (@80 mAh/g) | 2.6 V | 2.1 V |

A comparison between the lithium iron phosphate cathode materials of Example 1-1 and Comparative Example 1 shows that they exhibit generally the same rate characteristics at a low C-rate. However, when it comes to the high-rate characteristics at 15C and 20C, the lithium iron phosphate cathode material of Comparative Example 1 exhibits a low voltage and a low battery capacity, whereas the lithium iron phosphate cathode material of Example 1-1 maintains a high voltage and a high battery capacity.

As described above, the carbon content in the lithium iron phosphate cathode material is 0.8% to 1.5 wt% for Example 1-1 whereas it is 4.0% to 6.0 wt% for Comparative Example 1, which means that the lithium iron phosphate cathode material of Example 1-1 has a higher volume capacity density than the lithium iron phosphate cathode material of Comparative Example 1. Thus, improvement of volume energy density of secondary batteries can be expected.

### [Example 2]

Another example of the method for producing a lithium iron phosphate cathode material according to the present invention is described.

The method for producing a lithium iron phosphate cathode material of this example is characterized by performing two mixing steps consisting of a first mixing step and a second mixing step when lithium iron phosphate particles and a carbon precursor which forms a conductive carbon cover layer when pyrolyzed are mixed.

As the lithium iron phosphate particles, lithium iron phosphate particles synthesized by a well-known production method can be used as in the case with Example 1.

As the carbon precursor, a carbon material containing 20 to 99 wt% of an aromatic compound with a molecular weight of 160 or a higher and having a viscosity of 500 to 1,000 mPa ·sec at 20°C is used as in the case with Example 1.

In the first mixing step of Example 2, the carbon precursor is dissolved in a solvent, such as acetone or benzene, to reduce its viscosity at 20°C to lower than 500 Pa ·sec before it is mixed with the lithium iron phosphate particles.

The mixing in the first mixing step is preferably carried out in such a manner that the carbon precursor dissolved in the solvent is spread uniformly on the surface of the lithium iron phosphate particles. Because the carbon precursor dissolved in the solvent has a low viscosity, it can be spread uniformly by stirring and mixing the mixture at a relatively low speed or for a relatively short period of time.

In Example 2, the carbon precursor is added in two additions in order to impart both sufficient electron conductivity and sufficient lithium ion electrical conductivity to the lithium iron phosphate particles.

For example, when the carbon precursor is added in an amount of 3.5 wt% in total based on the weight of the lithium iron phosphate particles in the first and second mixing steps, 1.0 wt% is added in the first mixing step and the remaining 2.5 wt% is added in the second mixing step.

The carbon precursor is preferably added in an amount of 1.5 to 5.0 wt% in total based on the weight of the lithium iron phosphate in the first and second mixing steps.

Then, a step of evaporating the solvent contained in the mixture of lithium iron phosphate particles and the solvent solution of the carbon precursor obtained in the first mixing step is carried out. When the amount of solvent added is less than 30 wt% of the weight of the carbon precursor, the solvent can be evaporated by simply allowing the mixture to stand after mixing. When the amount of solvent is 30 wt% or greater, the solvent can be easily removed by vacuum deaeration. The carbon precursor has adhered almost uniformly to the lithium iron phosphate particles after the step of evaporating the solvent. Then, a second mixing step of mixing an additional amount of the carbon precursor with the mixture to which the carbon precursor has adhered almost uniformly is carried out.

In the second mixing step, the undiluted carbon precursor, which has a viscosity of 500 to 1000 mPa ·sec at 20°C (B-type viscometer, 6 rpm), is directly added and mixed. The mixing in the second mixing step is carried out, as in the mixing step of Example 1, using a planetary ball mill, a rotary mixer, such as High-Speed Mixer (Fukae Powtec Corporation), Henschel Mixer (trademark) (NIPPON COKE & ENGINEERING. CO., LTD.) or New-Gra Machine (SEISHIN ENTERPRISE Co., Ltd.), or a jet mill.

In this step, a conductive carbon cover layer having thicker portions can be intentionally formed by adjusting the stirring speed of the rotary mixer or the stirring period.

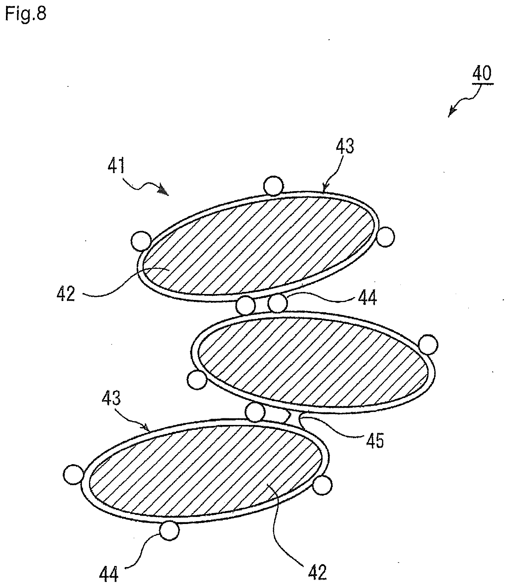

Then, the mixture is calcined at 550 to 750°C for 3 to 6 hours. A temperature range of 600 to 730°C is especially preferred. In Example 2, a calcination treatment was carried out at 700°C for 3 hours. As a result of the calcination treatment, the carbon precursor dispersed uniformly in the first mixing step is melted and spread uniformly over the entire surface of the lithium iron phosphate particles to form a thin and uniform conductive carbon cover layer 43 with a thickness of 2 nm or less as shown in FIG. 8. Because the carbon precursor dispersed in the second mixing step is dispersed more locally than the carbon precursor dispersed in the first mixing step, primary particles 41 of lithium iron phosphate 42 having carbon protrusions 44 with a length of 5 nm to 100 nm are formed as a result of the calcination treatment.

In Example 2, almost the entire conductive carbon cover layer is formed of cover layers with a thickness of 2 nm or less. Thus, a lithium iron phosphate cathode material 40 having a high lithium ion electrical conductivity can be obtained. In addition, the electron conductivity is imparted by the carbon protrusions 44 with a length of 5 nm to 100 nm formed on the surface of the conductive carbon cover layer 43. Reference numeral 45 indicates a bridge.

Because the carbon protrusions increase the contact area between the primary particles of lithium iron phosphate, the lithium iron phosphate cathode material has improved electron conductivity. In addition, because lithium ions can easily pass through the thin and uniform conductive carbon cover layer, the lithium iron phosphate cathode material has good lithium ion conductivity. Thus, when a secondary battery is produced, the rate characteristics are improved because lithium ions can pass easily during charge and discharge. As a result, a cathode material having excellent battery characteristics can be achieved in spite of the presence of a smaller amount of carbon.

## Claims

1. A lithium iron phosphate cathode material having primary particles of lithium iron phosphate coated with a conductive carbon cover layer, **characterized in that**
the conductive carbon cover layer comprises:
thin layer portions that have a thickness of less than 2 nm, and
thick layer portions that have a thickness of 2 nm or more;
wherein the thick layer portions have carbon protrusions with a length of 5 nm to 100 nm.

2. The lithium iron phosphate cathode material according to Claim 1, having secondary particles each formed of at least two primary particles of lithium iron phosphate contacting each other via the carbon protrusions.

## Patentansprüche

1. Lithium-Eisenphosphat-Kathodenmaterial, das Primärpartikel aus Lithium-Eisenphosphat aufweist, die mit einer leitfähigen Überzugsschicht aus Kohlenstoff beschichtet sind, **dadurch gekennzeichnet, dass**
die leitfähige Überzugsschicht aus Kohlenstoff folgendes umfasst:
dünne Teilschichten, die eine Dicke von weniger als 2 nm aufweisen, und
dicke Teilschichten, die eine Dicke von 2 nm oder mehr aufweisen;
wobei die dicken Teilschichten Ausbuchtungen aus Kohlenstoff mit einer Länge von 5 nm bis 100 nm aufweisen.

2. Lithium-Eisenphosphat-Kathodenmaterial gemäß Anspruch 1, das Sekundärpartikel aufweist, die jeweils aus mindestens zwei Primärpartikeln aus Lithium-Eisenphosphat gebildet sind, die über die Ausbuchtungen aus Kohlenstoff miteinander in Verbindung stehen.

## Revendications

1. Matériau de cathode au lithium fer phosphate ayant des particules primaires de lithium fer phosphate revêtues d'une couche de couverture de carbone conductrice, **caractérisé en ce que** la couche de couverture de carbone conductrice comprend :
- des parties de couche minces qui ont une épaisseur inférieure à 2 nm, et
- des parties de couche épaisses qui ont une épaisseur de 2 nm ou plus ;
dans lequel les parties de couche épaisses ont des protubérances de carbone ayant une longueur de 5 nm à 100 nm.

2. Matériau de cathode au lithium fer phosphate selon la revendication 1, ayant des particules secondaires formées chacune d'au moins deux particules primaires de lithium fer phosphate entrant en contact l'une avec l'autre par l'intermédiaire des protubérances de carbone.
